# EUROPÄISCHE PATENTANMELDUNG

(11) **EP 1 126 249 A2**
(43) Veröffentlichungstag der Anmeldung: **22.08.2001**
(21) Anmeldenummer: 01810118.8
(22) Anmeldetag: 06.02.2001
(51) Int. Cl.: G01D 5/24

(54) **Kapazitives Zahlrad**

(30) Priorität: 14.02.2000 DE 10006503
(71) Anmelder: ABB RESEARCH LTD., 8050 Zürich (CH)
(72) Erfinder: Matter, Daniel, 5200 Brugg (CH); Rueegg, Walter, 5304 Endingen (CH); Christen, Thomas, 5300 Vogelsang (CH); Prêtre, Philippe, 5405 Baden-Dättwil (CH)
(74) Vertreter: ABB Patent Attorneys

(57) **Zusammenfassung**

Eine Vorrichtung zur kapazitiven Bestimmung einer Position eines Zählrades (1) eine Radzählwerks weist beabstandet zum Zählrad (1) stationäre Elektroden (3,3') auf. Über den Umfang des Zählrads (1) erstreckt sich eine Folge von Messelektroden (12,12',12") und dazwischen angeordneten elektrisch nichtleitenden Abschnitten (13,13'). Dadurch lässt sich für jede Position des Zählrades und pro stationäre Elektrode einen entweder hohen oder tiefen Kapazitätswert, das heisst einen binären Wert zwischen 0 und 1, detektieren. Je nach Anzahl stationärer Elektroden pro Zählrad lassen sich diese binären Werte zu einer binären Darstellung einer beliebigen Zahl zusammensetzen, welche die momentane Position des Zählrades (1) kennzeichnet.

## Beschreibung

### Technisches Gebiet

Die Erfindung bezieht sich auf eine Vorrichtung zur kapazitiven Bestimmung einer Position eines Zählrades gemäss Oberbegriff des Patentanspruches 1.

### Stand der Technik

Radzählwerke, insbesondere Haushaltzähler für Wasser, Gas, Elektrizität oder Fernwärme, werden vielfach noch durch persönliche Augenscheinnahme vor Ort, das heisst in der Wohnung eines Konsumenten, abgelesen. Diese Art der Konsumationserfassung ist zeit- und kostenintensiv. Es ist deshalb wünschenswert, Radzählwerke mit elektronischen Ablesevorrichtungen zu schaffen, welche eine Fernablesung ermöglichen. Dabei sind berührungslose Ablesevorrichtungen zu bevorzugen, da sie weniger Abnützungserscheinungen unterworfen sind und deshalb in der Regel eine bessere Langzeitstabilität aufweisen.

Radzählwerke mit berührungslosen Ablesevorrichtungen sind aus US-A-5'554'981 bekannt. Diese Vorrichtungen ermöglichen, Rotationspositionen von Zählrädern des Radzählwerks kapazitiv zu bestimmen. Jedes Zählrad ist hierfür über einen Luftspalt beabstandet zu stationären Elektroden angeordnet, wobei es auf einer Lagerachse drehbar gelagert ist. Die Lagerachse ist geerdet und bildet eine Gegenelektrode, so dass der Körper des Zählrades zusammen mit dem Luftspalt ein Dielektrikum eines Kondensators bildet. Dabei ist der Körper so ausgebildet, dass sich die Dielektrizitätskonstante des Kondensators mit der Drehung des Körpers ändert. In einer Ausführungsform weist der Zählkörper hierfür stirnseitig ein umlaufendes elektrisch nicht leitendes Element auf, welches eine am Umfang kontinuierlich abnehmende Dicke besitzt, so dass der Luftspalt in Abhängigkeit der Position des Zählrades variiert. Der Kondensator weist somit eine sich stetig mit der Position des Zählrades ändernde Kapazität auf, welche mittels einer Auswerteelektronik der entsprechenden Position des Zählrades zuordnungsbar ist.
Diese Vorrichtung hat den Nachteil, dass analoge Kapazitätssignale diskreten Positionen des Zählrades zugeordnet werden sollen. Einerseits ist dadurch eine aufwendige Eichung der Auswerteelektronik notwendig, insbesondere um Herstellungstoleranzen zu kompensieren. Andererseits unterliegen die Materialien Alterungsprozessen, welche das Signal verändern und somit zu Ablesefehlern führen.

In einer anderen Ausführungsform der US-A-5'554'981 ist der Mantel des Zählrades in vier Ringe unterteilt, wobei jeder Ring aus vier nicht leitenden Abschnitten mit unterschiedlichen Dielektrizitätskonstanten besteht. Jedem Ring ist eine stationäre Elektrode zugeordnet, so dass jede stationäre Elektrode vier Kapazitätswerte an die Auswertelektronik liefert. Diese vier mal vier Kapazitätswerte liefern codierte Werte, welche den einzelnen diskreten Positionen des Zählrades direkt zuordnungsbar sind. Diese Vorrichtung weist einerseits den Nachteil auf, dass das Rad relativ kompliziert aufgebaut und deshalb in der Herstellung relativ teuer ist. Zudem liefert der zwischen dem Zählrad und den stationären Elektroden vorhandene Luftspalt den überwiegenden Beitrag zur gemessenen Kapazität, so dass die gemessenen Kapazitätswerte sich kaum voneinander unterscheiden.

### Darstellung der Erfindung

Es ist deshalb Aufgabe der Erfindung, eine Vorrichtung zur kapazitiven Bestimmung einer Position eines Zählrades der eingangs genannten Art zu schaffen, welche einfach herstellbar ist, jedoch eine einfache Ablesung der Positionen des Zählrades ermöglicht.

Diese Aufgabe löst eine Vorrichtung mit den Merkmalen des Patentanspruches 1.

Die erfindungsgemässe Vorrichtung weist über den Umfang eines Zählrades verteilt angeordnete Messelektroden auf, welche durch dazwischen angeordnete elektrisch nichtleitende Abschnitte getrennt sind. Dadurch ist es möglich, je nach Anzahl zu detektierender Positionen des Zählrades Folgen von Messelektroden und nichtleitenden Abschnitten sowie zugehörige Anordnungen von stationären Elektroden zu bilden, welche für jede Position des Zählrades und pro stationäre Elektrode einen entweder hohen oder tiefen Kapazitätswert, das heisst einen binären Wert von 0 oder 1, liefert. Je nach Anzahl stationärer Elektroden pro Zählrad lassen sich diese binären Werte zu einer binären Darstellung einer beliebigen Zahl zusammensetzen.

Die an eine Auswerteelektronik zu stellenden Anforderungen sind somit relativ einfach. Des weiteren üben Alterungsprozesse und Herstellungstoleranzen einen vernachlässigbaren Einfluss auf die Kapazitätsmessung aus, da lediglich zwischen einem hohen und einem tiefen Wert unterschieden werden muss. Vorteilhaft ist ferner, dass die erfindungsgemässe Vorrichtung nach wie vor einen freien Blick auf einen Teil des Umfanges des Zählrades erlaubt, so dass die mittels Zahlen auf dem Umfang kennzeichenbaren Positionen auch von Auge ablesbar bleiben.

In einer bevorzugten Ausführungsform der Erfindung ist das Zählrad aus einem nichtleitenden Material gefertigt, wobei auf seinem Mantel beziehungsweise in Ausnehmungen seines Mantels Messelektroden angeordnet sind.

In einer anderen Ausführungsform besteht das Zählrad selber aus einem elektrisch leitenden Material und in Ausnehmungen sind über den Umfang verteilt elektrisch nichtleitende Einlagen vorhanden.

In einer Ausführungsform sind stationäre Elektroden und eine Gegenelektrode vorhanden, welche beabstandet zum Zählrad angeordnet sind.

In einer anderen, bevorzugten Ausführungsform sind die stationären Elektroden zu Paaren mit einer Sendeelektrode und einer Empfängerelektrode zusammengefasst. Diese Ausführungsform weist den Vorteil auf, dass Übersprechen zwischen den einzelnen Elektroden weitgehend vermieden ist. Zudem sind Fehlmessungen, verursacht durch eine allfällige Unwucht oder eine axiale Lageveränderung des Zählrades, minimiert.

Weitere vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: eine schematische Darstellung eines Radzählwerks;
- Figur 2: eine Seitenansicht eines Zählrades mit der erfindungsgemässen Ablesevorrichtung in einer ersten Ausführungsform;
- Figur 3: eine Abwicklung einer Folge von auf dem Zählrad angeordneten Elektroden in der Ausführungsform gemäss Figur 2;
- Figur 4: eine perspektivische Darstellung eines Zählrades mit der erfindungsgemässen Ablesevorrichtung in einer zweiten Ausführungsform;
- Figur 5: eine Abwicklung einer Folge von auf dem Zählrad angeordneten Elektroden in der Ausführungsform gemäss Figur 4;
- Figur 6: eine perspektivische Darstellung eines Zählrades in einer dritten Ausführungsform und
- Figur 7a bis 7f: weitere Abwicklungen einer Folge von auf dem Zählrad angeordneten Elektroden.

### Wege zur Ausführung der Erfindung

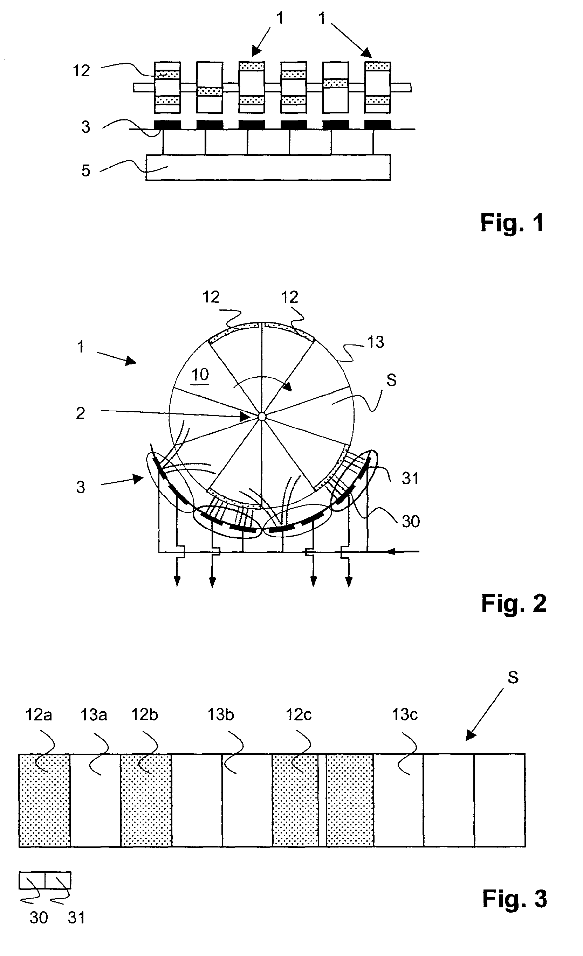

In Figur 1 ist schematisch ein Radzählwerk gemäss der Erfindung dargestellt. Es besteht im wesentlichen aus einer Vielzahl von Zählrädern 1, welche auf einer gemeinsamen oder mehreren Lagerachsen 2 gelagert sind. Das Radzählwerk ist mit einem hier nicht dargestellten, je nach Anwendungsbereich unterschiedlich gestalteten, mechanischen Bewegungselement über ein Getriebe wirkverbunden. Das mechanische Bewegungselement detektiert eine konsumierte Menge, beispielsweise von Wasser oder Gas, und veranlasst in bekannter Art und Weise die Zählräder 1 zu einer Rotation. Dabei können sich die Zählräder 1 kontinuierlich oder schrittweise drehen.

Jedes Zählrad 1 des Radzählwerks weist eine kapazitive Ablesevorrichtung zur Bestimmung der Position des Zählrades auf. Die Ablesevorrichtung besteht im wesentlichen aus einer Anzahl stationärer Elektroden 3, einer Anzahl von Messelektroden 12 und einer Auswerteelektronik 5. Die Messelektroden 12 sind über dem Umfang des Zählrades 1 verteilt angeordnet, wobei sie je nach Ausführungsform auf dem Mantel des Zählrads aufgebracht, in diesem eingelassen oder von diesem gebildet sind. Die stationären Elektroden 3 sind kreissegmentförmig und durch einen Luftspalt beabstandet zum Zählrad 1 angeordnet, wobei sie einen mindestens annähernd gleichbleibenden Abstand zu den Messelektroden aufweisen. Die Anzahl der stationären Elektroden 3 wie auch die Folge und Anzahl der Messelektroden 12 hängen von der Anzahl der zu detektierenden Positionen des Zählrades ab. Sollen, wie in den nachfolgenden Beispielen beschrieben, insgesamt zehn diskrete Positionen detektiert werden, so werden insgesamt vier stationäre Elektroden 3 benötigt, um binäre Werte von 0 bis 9 darzustellen. Die Folge der Messelektroden 12 wird zudem durch die Anordnung der stationären Elektroden 3 bestimmt, wobei im folgenden zwei Beispiele hierfür gezeigt werden.

Die Auswertelektronik 5 weist beispielsweise für jedes Zählrad einen Kapazitätsmesser 50 und einen Multiplexer 51 auf. Sie misst die zwischen stationären Elektroden 3 und Messelektroden 12 vorhandenen Kapazitäten, wobei jeder Kapazität ein binärer Wert von 0 oder 1 zugeordnet wird. Die vier stationären Elektroden 3 liefern somit zusammen eine Zahl zwischen 0 und 9 in binärer Darstellung.

In Figur 2 ist eine erste, bevorzugte Ausführungsform der erfindungsgemässen Ablesevorrichtung dargestellt:
Das Zählrad 1 weist einen Zählradkörper 10 auf, auf dessem Mantel die Messelektroden 12 ausgebildet sind. In dieser Ausführungsform sind die Messelektroden 12 in Form einer elektrisch leitenden Schicht, insbesondere einer Metallschicht, auf den Mantel des Zählradkörpers 10 aufgebracht. Der Zählradkörper 10 besteht in diesem Fall aus einem elektrisch nichtleitenden Material, beispielsweise aus Kunststoff, insbesondere aus Poyacetal. Das Zählrad ist in zehn virtuelle Sektoren S unterteilt, wobei sich eine Messelektrode 12 jeweils über einen Sektor S und vorzugsweise über die gesamte Breite des Zählrades erstreckt.

Auf dem Mantel des Körpers 10 ist somit eine Folge von Messelektroden 12 mit dazwischen angeordneten elektrisch nichtleitenden Abschnitten 13 vorhanden. Die Abwicklung dieser Folge ist in Figur 3 dargestellt. Einer ersten Messelektrode 12a folgt ein Sektor mit einem ersten nichtleitenden Abschnitt 13a, eine zweite Messelektrode 12b, zwei Sektoren mit nichtleitenden Abschnitten 13b, zwei Sektoren mit Messelektroden 12c, welche jedoch voneinander elektrisch isoliert sind, und drei Sektoren mit nichtleitenden Abschnitten 13c.

Die stationären Elektroden 3 sind entlang des Umfangs des Zählrades 1 angeordnet, wobei zwischen Elektroden 3 und Zählrad 1 ein mindestens annähernd gleichbleibender Luftspalt vorhanden ist. Die stationären Elektroden 3 sind vorzugsweise identisch ausgebildet und erstrecken sich vorzugsweise mindestens annähernd über die gesamte Breite des Zählrades 1. In diesem Beispiel sind jeweils zwei stationäre Elektroden 3 paarweise zusammengefasst, wobei vier Paare gebildet sind. Eine Elektrode eines Paares bildet eine Sendeelektrode 30 und die zweite Elektrode eine Empfängerelektrode 31. Die Sendeelektroden 30 sind in diesem Beispiel elektrisch miteinander verbunden. Die Sendelektroden können jedoch auch einzeln angesteuert werden. Die Empfängerelektroden 31 sind einzeln und die Sendeelektroden 30 gemeinsam mit der Auswerteelektronik 5 verbunden.

Jedes Paar der stationären Elektroden 3 bildet eine Gegenstück zu einem Sektor S, wobei das Paar eine entsprechende Länge aufweist. Vorzugsweise sind die Paare der stationären Elektroden 3 dabei so angeordnet, dass die vier Paare vier aufeinanderfolgenden Sektoren gegenüberstehen. Die vier Paare sind vorzugsweise so angeordnet, dass benachbarte Elektroden zweier benachbarter Paare desselben Typs sind, das heisst, dass eine Sendeelektrode eines ersten Paares neben einer Sendeelektrode eines zweiten Paares angeordnet ist. Dadurch lässt sich Übersprechen vermindern.

Durch die in den Figuren 2 und 3 dargestellte Folge von Messelektroden 12 und der Anordnung der stationären Elektroden 3 ist bei jeder Position des Zählrades 1 mindestens eine Messelektrode 12a, 12b unmittelbar gegenüber einem Paar von stationären Elektroden 3 angeordnet. Zudem ist stets mindestens eine Messelektrode 12c in einem von den stationären Elektroden 3 entfernten Bereich des Zählrades vorhanden.

Ist eine Messelektrode 12 im Bereich eines stationären Elektrodenpaares 3, so wird von der Sendeelektrode 30 Ladung über die Messelektrode 12 auf die Empfängerelektrode 30' indiziiert. Ist keine unmittelbar gegenüberliegende Messelektrode 12 vorhanden, so wird praktisch keine Ladung auf die Empfängerelektrode 30' zurückindiziiert. Dadurch lässt sich jedem stationären Elektrodenpaar 3 ein binärer Wert von 0 oder 1 zuordnen. Mittels der Folge gemäss Figur 3 lassen sich somit alle Werte zwischen 0 und 9 in binärer Darstellung detektieren.

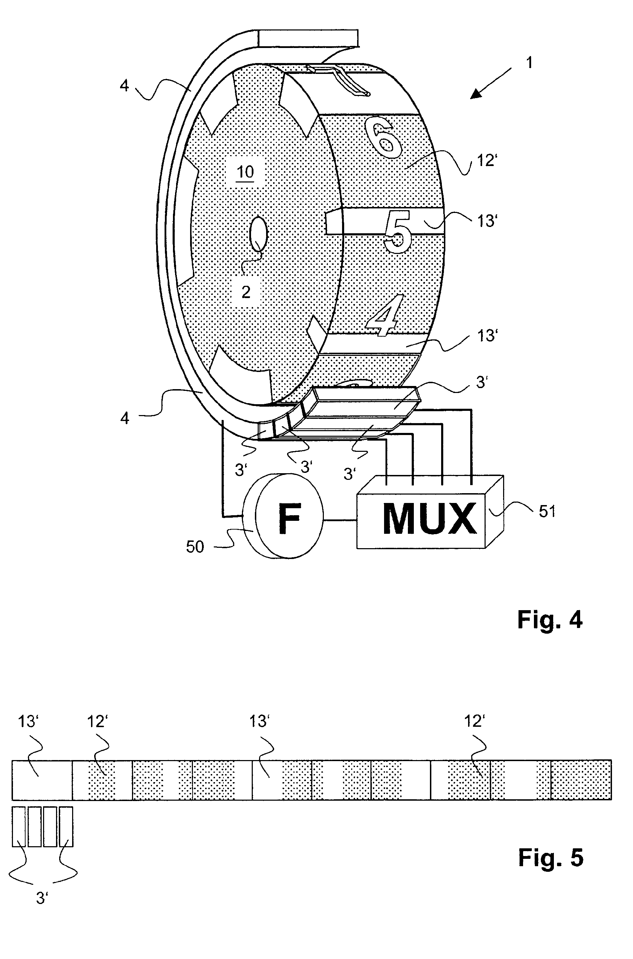

In Figur 4 ist ein zweites Ausführungsbeispiel dargestellt. In diesem Beispiel besteht der Körper 10 des Zählrads 1 aus einem leitenden Material, insbesondere Metall. Der Körper 10 weist Ausnehmungen 11 auf, in welche dielektrische Einlagen 14 aus einem elektrisch nichtleitenden Material eingebracht sind. Dadurch entsteht auf dem Mantel des Zählrades 1 wiederum eine umlaufende Folge von Messelektroden 12' und nichtleitenden Abschnitten 13'.

Diese Folge ist in Figur 5 dargestellt. Auch hier ist wiederum das Zählrad 1 in zehn virtuelle Sektoren S unterteilt. Es sind mehrere Messelektroden 12' vorhanden, welche sich über die gesamte Breite des Mantels erstrecken, jedoch nicht dieselbe Länge aufweisen wie die Sektoren S. Die Folge setzt sich wie folgt zusammen, wenn s die Länge eines Sektors bezeichnet:
1 ¼ s nichtleitend, ½s leitend, ¼ s nichtleitend, ½ s leitend, ¼ s nichtleitend, 1 s leitend, ¾ s nichtleitend, ¾ s leitend, ¼ s nichtleitend, 1 s leitend, ¾ s nichtleitend, 1 s leitend, ½ s nichtleitend, 1 ¼ s leitend.

Die zugehörige Anordnung von stationären Elektroden 3' ist in Figur 4 ersichtlich. Es sind vier stationäre Elektroden 3' vorhanden, welche elektrisch isoliert zueinander, in einer Reihe angeordnet sind und sich gemeinsam mindestens annähernd genau über einen Sektor S erstrecken. Ferner ist eine Gegenelektrode 4 vorhanden, welche sich vorzugsweise mindestens annähernd über den halben Umfang des Zählrades 1, also mindestens annähernd über fünf Sektoren S erstreckt. Sowohl stationäre Elektroden 3' wie auch die Gegenelektrode 4 weisen wiederum mindestens annähernd dieselbe Breite auf wie das Zählrad 1 beziehungsweise die Messelektroden 12'. Vorzugweise sind die stationären Elektroden 3' und die Gegenelektrode 4 auf einem gemeinsamen Bügel angeordnet, welcher sich in einem konstanten Abstand teilweise um das Zählrad 1 erstreckt.

Die Gegenelektrode 4 ist mit dem Kapazitätsmesser 50 verbunden, die stationären Elektroden 3 mit dem Multiplexer 51. Dadurch lassen sich wiederum für alle Stellungen des Zählrades 1 und für jede stationäre Elektrode 3 Werte zwischen 0 und 1 detektieren, so dass sich Werte zwischen 0 und 9 binär darstellen lassen.

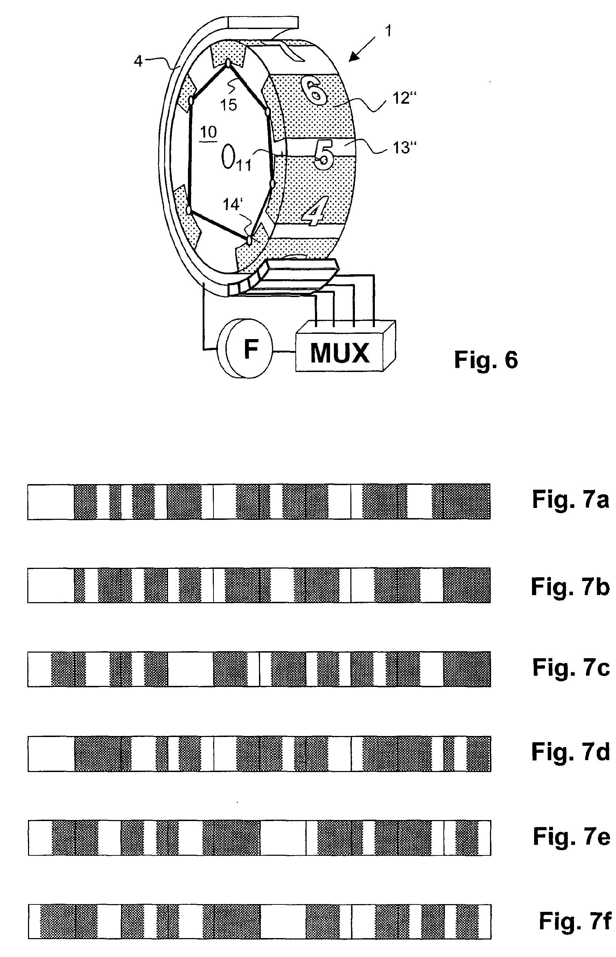

Figur 6 zeigt eine weitere Ausführungsform des Zählrades 1. Hier ist der Körper 10 des Zählrades aus einem nichtleitenden Material gefertigt, wobei er Ausnehmungen 11 aufweist. Die Ausnehmungen 11 sind mit Einlagen 14' aus einem elektrisch leitenden Material, insbesondere einem Metall, gefüllt, welche Messelektroden 12" bilden. Die Messelektroden 12" sind elektrisch miteinander über Verbindungen 15 verbunden, wenn sie in der Folge gemäss Figur 5 angeordnet sind. Die Verbindung erübrigt sich bei einer Folge gemäss Figur 3.

In den Figuren 7a bis 7f sind weitere Abwicklungen dargestellt, wie sie für das Zählrad gemäss Figur 4 oder 6 einsetzbar sind.

Dank der erfindungsgemässen Vorrichtung lassen sich mehrere mögliche Positionen eines Zählrades bestimmen, wobei die Bestimmung auf der Detektion von lediglich zwei Kapazitätswerten basiert.

### Bezugszeichenliste

- 1: Zählrad
- 10: Zählradkörper
- 11: Ausnehmung
- 12: Messelektrode
- 12a: erste Messelektrode
- 12b: zweite Messelektrode
- 12c: dritte Messelektrode
- 12': Messelektrode
- 12": Messelektrode
- 13: nichtleitender Abschnitt
- 13': nichtleitender Abschnitt
- 14: nichtleitende Einlage
- 14': leitende Einlage
- 15: elektrische Verbindung

- 2: Lagerachse

- 3: stationäre Elektrode
- 30: Sendeelektrode
- 31: Empfängerelektrode
- 3': stationäre Elektrode

- 4: Gegenelektrode

- 5: Auswerteelektronik
- 50: Kapazitätsmesser
- 51: Multiplexer

- s: virtueller Sektor

## Patentansprüche

1. Vorrichtung zur kapazitiven Bestimmung einer Position eines Zählrades (1), wobei beabstandet zum Zählrad (1) stationäre Elektroden (3,3') angeordnet sind und das Zählrad (1) Mittel zur positionsabhängigen Änderung einer Kapazität aufweist,
dadurch gekennzeichnet, dass
die Mittel zur positionsabhängigen Änderung der Kapazität eine sich über den Umfang des Zählrades (1) erstreckende Folge von Messelektroden (12,12',12") und dazwischen angeordneten elektrisch nichtleitenden Abschnitten (13,13') ist.

2. Vorrichtung nach Anspruch 1, dadurch gekennzeichnet, dass die stationären Elektroden (3,3') entlang des Umfangs des Zählrades (1) angeordnet sind.

3. Vorrichtung nach Anspruch 1, dadurch gekennzeichnet, dass das Zählrad einen Körper aus einem elektrisch nichtleitenden Material aufweist.

4. Vorrichtung nach Anspruch 1, dadurch gekennzeichnet, dass das Zählrad (1) einen Körper (10) aus einem elektrisch leitenden Material aufweist, welcher über dem Umfang verteilte Ausnehmungen (11) besitzt, in welche elektrisch nicht leitende Einlagen (14) eingebracht sind.

5. Vorrichtung nach Anspruch 1, dadurch gekennzeichnet, dass die stationären Elektroden (30,31) paarweise zusammengefasst sind, dass alle Messelektroden (12) auf dem Zählrad (1) dieselbe Länge aufweisen und dass jedes Paar eine gemeinsame Länge aufweist, welche der Länge der Messelektroden (12) auf dem Zählrad entspricht.

6. Vorrichtung nach Anspruch 5, dadurch gekennzeichnet, dass jedes Paar der Elektroden aus einer Sende- und einer Empfängerelektrode (30,31) besteht, wobei benachbarte Elektroden zweier benachbarter Paare desselben Typs sind.

7. Vorrichtung nach Anspruch 1, dadurch gekennzeichnet, dass eine Gegenelektrode (4) vorhanden ist, welche sich entlang mindestens des halben Umfanges des Zählrades (1) beabstandet zu diesem erstreckt.

8. Vorrichtung nach einem der Ansprüche 5 oder 7, dadurch gekennzeichnet, dass vier stationäre Elektroden (3') oder vier Elektrodenpaare (3) vorhanden sind.

9. Vorrichtung nach Anspruch 1, dadurch gekennzeichnet, dass der Abstand zwischen Messelektroden (12,12',12") und ihnen je nach Position des Zählrades jeweils gegenüberliegenden stationären Elektroden (3,3') mindestens annähernd gleich ist.

10. Vorrichtung nach den Ansprüchen 5 und 7, dadurch gekennzeichnet, dass die auf dem Umfang verteilte Folge eine Abwicklung gemäss Figur 3 aufweist.
